# EUROPEAN PATENT APPLICATION

(11) **EP 4 813 635 A1**
(43) Date of publication of application: **30.09.2026**
(21) Application number: 24908066.4
(22) Date of filing: 18.12.2024
(51) Int. Cl.: B32B 37/10, B32B 37/12, B32B 15/08, B32B 15/20, B32B 38/00, C09J 179/08, C09J 163/00

(54) **METHOD FOR CONTINUOUSLY MANUFACTURING FLEXIBLE METAL LAMINATE INCLUDING THICK FILM-TYPE INSULATING LAYER**

(30) Priority: 19.12.2023 KR 20230186030
(71) Applicant: Doosan Corporation, Seoul 04563 (KR)
(72) Inventor: LEE, Sanghwan, Yongin-si, Gyeonggi-do 16858 (KR); JUNG, Yoonho, Yongin-si, Gyeonggi-do 16858 (KR); YANG, Woojin, Yongin-si, Gyeonggi-do 16858 (KR); KIM, Sungjin, Yongin-si, Gyeonggi-do 16858 (KR)
(74) Representative: Isarpatent
(86) International application number: PCT/KR2024/020615
(87) International publication number: WO 2025/135783

(57) **Abstract**

The present invention provides a method for continuously manufacturing a metal laminate including a thick film-type insulating layer having a thickness of 50 µm or greater. By applying a belt press to roll-to-roll processing and simultaneously optimizing conditions for the belt press, the present invention not only enables a flexible metal laminate including a thick film-type insulating layer to be easily manufactured through a single continuous process but also can ensure reduced manufacturing time, increased productivity, and reliability of a final product simultaneously.

## Description

### Technical Field

The present invention relates a method for continuously manufacturing a flexible metal clad laminate including a thick insulating layer having a thickness of 50 µm or more.

### Background Art

Flexible Copper Clad Laminates (FCCLs) are mainly used as a base material for Flexible Printed Circuit Boards (FPCBs), and are otherwise used for planar heating elements, electromagnetic wave shielding materials, flat cables, packaging materials, and the like. Recently, as electronic devices using printed circuit boards have gradually become smaller, more high-density, and more highly efficient, the use of flexible copper clad laminates has been further increasing.

The flexible copper clad laminate generally consists of a polyimide-based insulating layer and a copper foil layer. Generally, flexible copper clad laminates are mass-produced by a roll-to-roll process; however, due to the process limitations of the aforementioned roll-to-roll process, it has been difficult to form a thick insulating layer having a thickness of 50 µm or more.

To solve this problem, when a batch-type pressing process is performed after the roll-to-roll process, a flexible copper clad laminate including a thick insulating layer can be manufactured; however, the addition of a separate process causes an increase in manufacturing costs and a decrease in production efficiency. In addition, the roll-to-roll process exhibits poor adhesion between a plurality of insulating layers for forming the thick insulating layer, which inevitably leads to delamination between the layers of the final flexible copper clad laminate and a decrease in the reliability of the final product.

### Disclosure of Invention

### Technical Problem

The present invention has been made to solve the aforementioned problems. By applying a belt press to a conventional roll-to-roll process, and simultaneously introducing a specific adhesive layer and/or optimizing the belt press conditions, a flexible metal clad laminate having a thick insulating layer can be easily manufactured through a single continuous process. Furthermore, manufacturing time can be reduced, productivity can be improved, and reliability of the final product can be ensured.

Other purposes and advantages of the present invention will be clarified by following detailed description and claims.

### Solution to Problem

To achieve the above objectives, the present invention provides a method for manufacturing a flexible metal clad laminate including a thick insulating layer having a thickness of 50 µm or more, the method comprising the steps of: (i) preparing at least one roll-type metal foil; (ii) preparing a plurality of roll-type insulating films; and (iii) passing the metal foil and the insulating films through a belt press while continuously supplying the metal foil and the insulating films in a roll-to-roll manner to simultaneously press and laminate the metal foil and the insulating films, wherein at least one of the metal foil and the insulating films comprises an adhesive layer formed on one or both surfaces thereof.

In an embodiment of the present invention, the metal foil may be a copper foil or a resin-coated copper foil (RCC).

In an embodiment of the present invention, the step (i) may comprise preparing at least two or more metal foils, and the at least two metal foils have the same thickness and surface roughness as each other.

In an embodiment of the present invention, the metal foil may have a roughness (Rz) of 0.5 to 3 µm and a thickness of 1 to 50 µm.

In an embodiment of the present invention, when at least two metal foils are prepared, the plurality of insulating films prepared in the step (ii) may be disposed between the metal foils.

In an embodiment of the present invention, a surface of the resin-coated copper foil on which the resin layer is formed or a surface of the insulating film may be plasma-treated.

In an embodiment of the present invention, the adhesive layer may be formed on one surface of the metal foil in contact with the insulating film, one surface of the insulating film in contact with the metal foil, or one surface or both surfaces of the plurality of insulating films in contact with each other.

In an embodiment of the present invention, the adhesive layer may comprise at least one selected from the group consisting of a thermoplastic polyimide-based adhesive and an epoxy resin-based adhesive.

In an embodiment of the present invention, the thickness of a single insulating film among the plurality of insulating films in the step (ii) may be 50 µm or less, and the thickness of the thick insulating layer formed from the plurality of insulating films may be 50 to 200 µm.

In an embodiment of the present invention, the belt press of step (iii) may include: an upper belt having a plurality of rollers; a lower belt having a plurality of rollers; a heating device for applying heat, pressure, or both to an object passing between the upper belt and the lower belt; and a cooling device capable of cooling the object passing between the upper belt and the lower belt.

In an embodiment of the present invention, the belt press of step (iii) may be a hydraulic belt press or a roll-type belt press.

In an embodiment of the present invention, a curing temperature of the epoxy resin-based adhesive may be equal to or lower than a belt temperature applied to the belt press.

In an embodiment of the present invention, the epoxy resin-based adhesive layer may have a degree of curing of 50% or less in a semi-cured state before passing through the belt press, and may have a degree of curing of 70% or more in a fully cured state after passing through the belt press.

In an embodiment of the present invention, the thermoplastic polyimide-based adhesive layer may have a degree of curing of 70% or more in a fully cured state before passing through the belt press.

In an embodiment of the present invention, when the adhesive layer is an epoxy resin-based adhesive, the step (iii) may be performed under conditions of a belt temperature of 180 to 380°C, a pressure of 10 to 80 bar, and a transfer speed of 1 to 8 m/min.

In an embodiment of the present invention, when the adhesive layer is a thermoplastic polyimide-based adhesive, the step (iii) may be performed under conditions of a belt temperature of 300 to 380°C, a pressure of 10 to 80 bar, and a transfer speed of 1 to 8 m/min.

In an embodiment of the present invention, a roll-type flexible metal clad laminate including a thick single insulating layer may be formed by a continuous process comprising steps (i) to (iii).

In an embodiment of the present invention, the flexible metal clad laminate may satisfy the following conditions: an interfacial adhesion strength between the plurality of insulating films is 0.8 kgf/cm or more; and an adhesion strength between the metal foil and the insulating film is 0.5 to 1.5 kgf/cm.

In addition, the present inventio provides a method for continuously manufacturing a flexible metal clad laminate including a thick insulating layer having a thickness of 50 µm or more, the method comprising the steps of: (a) preparing two roll-type resin-coated metal foils, and arranging the resin layer-forming surfaces of the resin-coated metal foils to face each other; and (b) passing the two resin-coated metal foils through a belt press while continuously supplying the two resin-coated metal foils in a roll-to-roll manner to simultaneously press and laminate the resin-coated metal foils.

In an embodiment of the present invention, the resin layer formed on the surface of the resin-coated metal foil may include at least two or more resin layers.

In an embodiment of the present invention, the thickness of the resin layer included in the resin-coated copper foil may be 50 *µ*m or less, and the total thickness of an insulating layer formed by integrating at least two resin layers facing each other may be 50 to 200 *µ*m.

### EFFECTS OF THE INVENTION

According to an embodiment of the present invention, by applying a belt press to a conventional roll-to-roll continuous process, and simultaneously introducing a specific adhesive layer and/or optimizing belt press conditions, a flexible metal clad laminate having a thick insulating layer can be easily manufactured through a single continuous process. Furthermore, manufacturing time can be reduced, productivity can be improved, and excellent quality and high reliability of the final product can be secured.

In addition, the present invention eliminates gaps from a press heat source, which occur during compression of sheet forms in a conventional batch process, thereby removing non-uniformity in manufacturing conditions and final products. By applying uniform press conditions throughout the entire process, which is an advantage of the roll-to-roll method, uniformity and reliability of the final product can be secured.

Accordingly, the flexible metal clad laminate according to the present invention may be usefully used as a low dielectric flexible metal clad laminate (FCCL) or a flexible printed circuit board (FPCB) for a 5G mobile device and may be applied to various other technical fields without limitation.

Effects according to the present invention are not limited by the description exemplified above, and more diverse effects are included in the present specification.

### BRIEF DESCRIPTION OF DRAWINGS

FIG. 1 is a manufacturing process diagram of a flexible metal clad laminate according to an embodiment of the present invention.
FIG. 2 is a manufacturing process diagram of a flexible metal clad laminate according to another embodiment of the present invention.
FIG. 3 is a manufacturing process diagram of a flexible metal clad laminate according to another embodiment of the present invention.
FIG. 4 is a cross-sectional view of a hydraulic belt press according to an embodiment of the present invention.

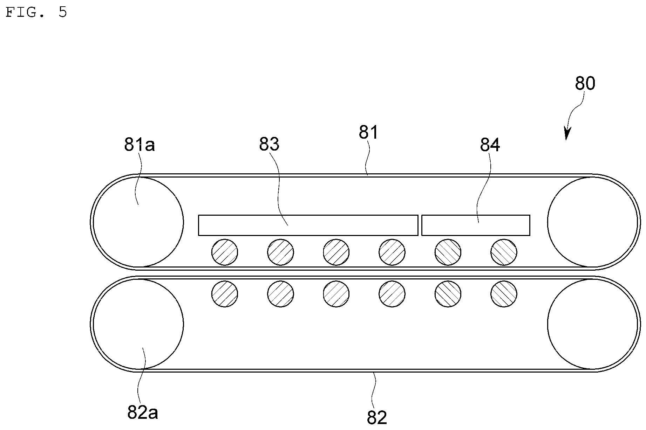

FIG. 5 is a cross-sectional view of a roll-type belt press according to another embodiment of the present invention.

### < Description of Reference Numerals >

Flexible metal clad laminate: 100, 200, 300
Metal foil: 10
Resin-coated copper foil: 20
Copper foil: 21, Resin layer: 22
Insulating film: 30
Adhesive layer: 40
Thick insulating layer: 50
Metal foil supply roller: 60
Insulating film supply roller: 70
Belt press: 80
Upper belt: 81, Lower belt: 82
Upper roller: 81a, Lower roller: 82a
Heating device: 83
Cooling device: 84
Winding roller: 90

### DETAILED DESCRIPTION OF THE INVENTION

Hereinafter, the present invention will be described in detail. The embodiments of the present invention are provided to more fully describe the present invention to those skilled in the art, and the following embodiments may be modified into various other forms, and the scope of the present invention is not limited to the following embodiments. Here, the same reference numerals refer to the same structure throughout this specification.

Unless otherwise defined, all terms used in the present specification (including technical and scientific terms) may be used with meanings that may be commonly understood by those skilled in the art. In addition, the terms defined in the commonly used dictionaries are not ideally or excessively interpreted, unless they are specifically defined clearly.

In addition, throughout the specification, when a part is said to "include" an element, it means that it may further include another element, not excluding other elements, unless otherwise stated. In addition, throughout the specification, "above" or "on" means not only the case where it is located above or below a target part but also the case where there is another part in the middle thereof and does not necessarily mean the upward direction of gravity.

### <Method for continuously manufacturing flexible metal clad laminate>

An embodiment of the present invention provides a method of manufacturing a flexible metal laminate, and more particularly, is a method for continuously manufacturing a flexible metal clad laminate including a thick insulating layer having a thickness of 50 *µ*m or more.

The thick insulating layer needs to be integrated by arranging a metal foil and a plurality of polyimide (e.g., PI) insulating films, followed by heating and pressing. However, in a conventional roll-to-roll continuous method, the plurality of insulating films cannot be sufficiently laminated and integrated in a single process, and even when fabricated, delamination between the insulating films inevitably occurs, thereby causing deterioration in physical properties and reliability of the final product.

In addition, a separate batch-type pressing process may be performed after the roll-to-roll continuous process; however, in this case, production costs increase and production efficiency decreases. Moreover, in a batch-type process in which a sheet form is pressed, spacing from a press heat source and resulting nonuniform manufacturing conditions occur, leading to non-uniformity in the final product.

Accordingly, in the present invention, by applying a belt press during the conventional roll-to-roll continuous process, and at the same time, introducing a specific adhesive layer, and/or optimizing the belt press condition, both advantages of the roll-to-roll continuous process and advantages of the belt press process are implemented. Accordingly, the flexible metal clad laminate including the thick insulating layer may be manufactured by a single continuous process, and manufacturing time may be shortened, productivity may be increased, and reliability of a final product may be secured.

Hereinafter, a method of manufacturing a flexible metal clad laminate according to the present invention will be described. However, the present invention is not limited to the following manufacturing method, and each process may be performed by modifying or selectively mixing the steps of the steps according to needs.

The method of manufacturing the flexible metal clad laminate may be carried out according to three embodiments depending on whether an insulating film for forming a thick insulating layer is used or not and the type of a metal foil.

Specifically, referring to the first embodiment of manufacturing the flexible metal clad laminate, the method may include: (i) preparing at least one roll-type metal foil (S100); (ii) preparing a plurality of roll-type insulating films (S200); and (iii) passing the metal foil and the insulating films through a belt press while continuously supplying the metal foil and the insulating films in a roll-to-roll manner to simultaneously press and laminate the metal foil and the insulating films (S300).

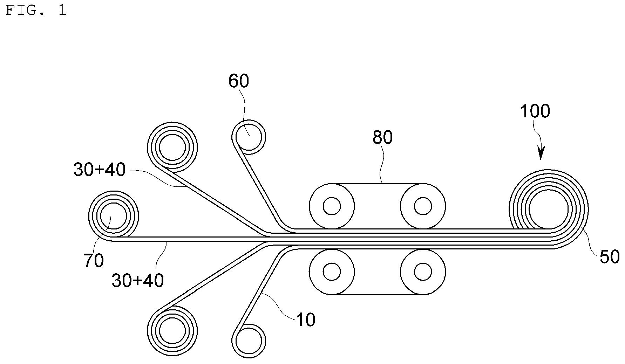

FIG. 1 is a manufacturing process diagram of a flexible metal clad laminate 100 according to the first embodiment of the present invention. Hereinafter, the manufacturing method will be described by dividing the manufacturing method into each step with reference to FIG. 1.

### (i) preparation step of a metal foil('S100 step')

In step S100, at least one metal foil for forming the flexible metal clad laminate 100 is prepared.

In the present invention, the metal foil 10 is in a roll-type and is continuously supplied from a metal foil supply roller 60, since the manufacturing method of the present invention is performed by a roll-to-roll continuous process.

The metal foil 10 may be used without particular limitation as long as it is a common metal component applied to a flexible metal clad laminate or a flexible printed circuit board in the art. For example, the metal foil 10 may be one kind of metal thin film selected from the group consisting of copper (Cu), iron (Fe), nickel (Ni), titanium (Ti), aluminum (Al), silver (Ag), and gold (Au), or two or more kinds of alloy thin films. Preferably, the metal foil 10 may be a copper foil having excellent electrical conductivity and low price or a resin-coated copper foil (RCC). These copper foils may be used without limitation as conventional copper foils known in the art, and all copper foils manufactured by rolling and electrolytic methods may be used. In addition, a copper foil treated with anti-oxidation may be used to prevent oxidation and corrosion on the surface thereof.

At this time, when one metal foil 10 is used, a single-sided flexible metal clad laminate is manufactured, and when at least two metal foils 10 are used, a double-sided flexible metal clad laminate is manufactured. When at least two metal foils are prepared in step S100, the at least two metal foils 10 may have the same thickness and surface roughness. In this case, the surface of the metal foil 10 in contact with the insulating film may be a roughened surface having a predetermined surface roughness, and the roughened surface may have an average roughness (Rz) of about 0.5 to 3 µm.

The thickness of the metal foil 10 is not particularly limited, and may be in a range of about 1 to 50 µm, specifically about 1 to 30 µm, in consideration of the thickness and mechanical properties of the final flexible metal clad laminate 100.

### (ii) preparation step of a plurality of insulating film ('S200 step')

In step S200, a plurality of insulating films 30 for forming a flexible metal clad laminate are prepared.

In the present invention, the insulating films 30 are also configured as a roll-type and is continuously supplied from a plurality of insulating film supply rollers 70, since the manufacturing method of the present invention is performed by a roll-to-roll continuous process. In this case, when at least two metal foils are used in the step S100, the plurality of insulating films are disposed between the at least two metal foils.

The number of the insulating films 30 is not particularly limited, and the number and thickness of the insulating films 30 may be freely selected in consideration of the thickness (e.g., 50 µm or more) of the thick insulating layer to be formed. For example, when the insulating film has a thickness of 25 µm or more, two or more insulating films may be used, and when the insulating film has a thickness of 20 µm or less, three or more insulating films may be used.

The insulating film 30 may be used without particular limitation as long as the insulating film 30 is a component having a typical insulating property applied to a flexible metal clad laminate or a flexible printed circuit board in the art. For example, the insulating film 30 may include at least one selected from the group consisting of polyimide, polyamide, polyamide imide, polyamic acid resin, polyester, polyphenylene sulfide, polyester sulfone, polyether ether ketone, aromatic polyamide, polycarbonate, and polyarylate. Preferably, the polyimide (PI) film or the polyimide-based resin may further include a thermosetting resin.

In one embodiment, the insulating film 30 may be a commercially available polyimide (PI) film. The polyimide film may be in the form of a self-supporting film or sheet, and may be a commercially available general-purpose polyimide (PI) film or a commercially available soluble polyimide (soluble PI). In addition, the diamine compound and acid anhydride (e.g., aromatic acid dianhydride) known in the art may be subjected to a condensation reaction, and the resulting product may be applied onto a substrate, followed by drying and curing. The polyimide film may be subjected to surface treatment such as matting or corona treatment.

The thickness of the insulating film 30 is not particularly limited, and may be appropriately adjusted in consideration of handling properties, physical rigidity, and reduction in substrate thickness. For example, the thickness of each insulating film among the plurality of insulating films may be 50 µm or less, specifically 5 to 20 µm, and more specifically 5 to 10 µm. In addition, to improve adhesion, the surface of the insulating film is preferably subjected to plasma treatment.

Meanwhile, in the present invention, an adhesive layer 40 is included to increase adhesion between different materials, i.e., between an adjacent metal foil 10 and the insulating film 30, and interlayer interface adhesion between the plurality of insulating films 30.

In one embodiment, the adhesive layer 40 may be formed on one surface of the metal foil 10 in contact with the insulating film 30, one surface of the insulating film 30 in contact with the metal foil 10, or one surface or both surfaces of the plurality of insulating films 30 in contact with each other.

The adhesive layer 40 may include at least one of a typical thermosetting resin and a thermoplastic resin known in the art.

In one embodiment, the adhesive layer 40 may be a thermoplastic polyimide-based adhesive. When the thermoplastic polyimide is used as an adhesive layer component, adhesion between a polyimide insulating layer and a copper foil, which conventionally exhibits poor adhesion performance, may be improved to prevent delamination and structural deformation of a flexible copper clad laminate.

In another embodiment, the adhesive layer 40 may include a thermosetting resin, and may further include at least one selected from the group consisting of a thermoplastic resin, a curing agent, and an inorganic filler.

Non-limiting examples of the thermosetting resin may include at least one selected from the group consisting of an epoxy resin, a polyurethane resin, an alkyd resin, a phenol resin, a melamine resin, a silicone resin, a urea resin, a vegetable oil-modified phenol resin, a xylene resin, a guanamine resin, a diallylphthalate resin, a vinyl ester resin, an unsaturated polyester resin, a furan resin, a polyimide resin, a cyanate resin, a maleimide resin, and a benzocyclobutene resin. Specifically, the thermosetting resin may be one or more selected from the group consisting of an epoxy resin, a phenol resin, a melamine resin, a silicone resin, a urethane resin, and a urea resin. Preferably, the adhesive layer 40 may be an epoxy resin-based adhesive.

As the epoxy resin, a conventional epoxy resin known in the art may be used without limitation, and it is preferable that two or more epoxy groups are present in one molecule while containing no halogen element. Non-limiting examples of the epoxy resin that can be used include bisphenol A type/F type/S type resin, a novolac type epoxy resin, an alkylphenol novolac type epoxy resin, a biphenyl type resin, an aralkyl type resin, a naphthol type resin, a dicyclopentadiene type resin, or a mixture thereof. More specific examples thereof include bisphenol A type epoxy resin, bisphenol F type epoxy resin, bisphenol S type epoxy resin, naphthalene type epoxy resin, anthracene type epoxy resin, biphenyl type epoxy resin, tetramethyl biphenyl type epoxy resin, phenol novolac type epoxy resin, cresol novolac type epoxy resin, bisphenol A novolac type epoxy resin, bisphenol S novolac type epoxy resin, biphenyl novolac type epoxy resin, naphthol novolac type epoxy resin, naphthol phenol coaxial novolac type epoxy resin, naphthol cresol coaxial novolac type epoxy resin, aromatic hydrocarbon formaldehyde resin-modified phenol resin type epoxy resin, triphenylmethane type epoxy resin, tetraphenylethane type epoxy resin, dicyclopentadiene phenol addition reaction type epoxy resin, phenol aralkyl type epoxy resin, polyfunctional phenol resin, naphthol aralkyl type epoxy resin, and the like. Here, the epoxy resins described above may be used alone or in combination of two or more kinds.

Non-limiting examples of thermoplastic resins that may also be used include olefin resins, acrylic resins, rubbers, or mixtures thereof. Specific examples thereof include polyethylene, polypropylene, polystyrene, polyimide, polytetrafluoroethylene (Teflon, PTFE), acrylonitrile-butadiene rubber (NBR), styrene butadiene rubber (SBR), acrylonitrile-butadiene-styrene rubber (ABS), carboxyl-terminated butadiene acrylonitrile rubber (CTBN), polybutadiene, styrene-butadiene-ethylene rubber (SEBS), acrylic acid and/or methacrylic acid ester resin containing a side chain of 1 to 8 carbon atoms (acrylic rubber), or a mixture of one or more thereof.

The above-mentioned thermoplastic resin preferably contains a functional group capable of reacting with an epoxy resin, which is a thermosetting resin. Specifically, the functional group is at least one selected from the group consisting of an amino group, a carboxyl group, an epoxy group, a hydroxyl group, a methoxy group, and an isocyanate group. Since such functional groups form strong bonds with the epoxy resin, heat resistance after curing is improved, which is preferable. In particular, in the present invention, it is more preferable to use an acrylonitrile-butadiene copolymer (NBR) in consideration of adhesiveness, flexibility, and thermal stress relaxation effects. The copolymer preferably contains a functional group capable of reacting with an epoxy resin. Specific examples of the functional group include an amino group, a carboxyl group, an epoxy group, a hydroxyl group, a methoxy group, an isocyanate group, a vinyl group, and a silanol group, and it is particularly preferable that the functional group includes a carboxyl group. Specific examples of the NBR having a carboxyl group include PNR-1H (JSR Co., Ltd.), Nipol 1072J, and Nipol DN631 (manufactured by Zeon Corporation).

The thermoplastic resin content is not particularly limited, and for example, may be in a range of 1 to 35 wt %, preferably 5 to 30 wt %, based on the total weight of the adhesive composition. When the thermoplastic resin content is outside the above range, sufficient adhesive properties cannot be obtained, and heat resistance may be deteriorated.

In the present invention, a conventional curing agent known in the art may be used without limitation, and may be suitably selected depending on the type of epoxy resin to be used. Non-limiting examples of the curing agent include phenolic curing agents, anhydride curing agents, dicyandiamide curing agents, and aromatic polyamine curing agents. Non-limiting examples of the phenolic curing agents include phenol novolac, cresol novolac, bisphenol A novolac, and naphthalene type curing agents; and non-limiting examples of the polyamine curing agents include metaphenylenediamine, diaminodiphenylmethane (DDM), and diaminodiphenyl sulfone (DDS). These curing agents may be used alone or in combination of two or more thereof.

In the present invention, the content of the curing agent is not particularly limited, and for example, may be in a range of 5 to 10 parts by weight based on 100 parts by weight of the total adhesive composition.

The present invention may include a conventional inorganic filler known in the art. Non-limiting examples of the inorganic filler include silicas such as natural silica, fused silica, amorphous silica, and crystalline silica; boehmite, alumina, aluminum hydroxide Al(OH)₃, talc, spherical glass, calcium carbonate, magnesium carbonate, magnesia, clay, calcium silicate, titanium oxide, antimony oxide, glass fiber, aluminum borate, barium titanate, strontium titanate, calcium titanate, magnesium titanate, bismuth titanate, barium zirconate, calcium zirconate, boron nitride, silicon nitride, talc and mica, and the like. These inorganic fillers may be used alone or in combination of two or more thereof.

The particle size of the inorganic filler is not particularly limited, and the average particle diameter may be in a range of 0.5 to 10 µm. In addition, the content of the inorganic filler is not particularly limited, and for example, may be in a range of 5 to 20 parts by weight based on 100 parts by weight of the total adhesive composition.

In addition to the above-described components, other additives such as flame retardants generally known in the art, various polymers such as other thermosetting resins or thermoplastic resins and oligomers thereof not described above, solid rubber particles, ultraviolet absorbers, antioxidants, polymerization initiators, dyes, pigments, dispersants, thickeners, leveling agents, and the like may be additionally included, as long as the inherent properties of the adhesive composition are not impaired.

According to an embodiment, the thermosetting adhesive composition constituting the adhesive layer 40 may include 30 to 50 parts by weight of an epoxy resin; 5 to 40 parts by weight of a thermoplastic resin; 5 to 10 parts by weight of a curing agent; and 5 to 30 parts by weight of an inorganic filler, based on 100 parts by weight of the composition. Here, the epoxy resin may impart chemical resistance and flexibility, and the thermoplastic resin may provide improved adhesion, flexibility, and thermal stress relaxation. In this case, the thermosetting adhesive composition may include an organic solvent, and the amount of the organic solvent may correspond to the remainder required to make the total composition 100 parts by weight.

The thickness of the adhesive layer 40 is not particularly limited, and may be appropriately adjusted within a range known in the art. For example, the thickness of the adhesive layer 40 may be 2 to 15 µm, and preferably 5 to 12 µm.

### (iii) laminating step ('S300 step')

In step S300, the metal foil 10 and the plurality of insulating films 30, which are continuously supplied in a roll-to-roll manner, are passed through a belt press 80 to be simultaneously pressed and laminated, thereby manufacturing the flexible metal clad laminate 100 including a thick insulating layer 50.

In order to manufacture the flexible metal clad laminate including the thick insulating layer by a single continuous process, in the present invention, the belt press is introduced into the conventional roll-to-roll process, and the conditions of the belt press are controlled within a predetermined range.

The belt press process of step S300 may be a process in which a laminate, in which the metal foil 10 and the plurality of insulating films 30 disposed therebetween are stacked, is processed on a belt so as to have a predetermined thickness, and in which, at the same time, the plurality of insulating films 30 are compressed by heating and pressing, such that the metal foil 10 and the insulating film 30 and/or the plurality of insulating films 30 are laminated and integrated, followed by cooling to form a thick single insulating layer 50 having a predetermined thickness.

The belt press 80 may be a belt press apparatus known in the art without limitation, and the type of the belt press is not particularly limited. For example, the belt press may be a hydraulic belt press or a roll-type belt press.

Here, the hydraulic belt press refers to a pressing process of an object by fluid pressure, and is a method of transferring a predetermined temperature and pressure to a belt surface through a fluid filled in the belt. For example, the hydraulic belt press includes a pressurizing fluid capable of generating uniform pressure on surfaces of a plurality of upper rollers and a plurality of lower rollers and/or a space therebetween. The fluid may be a conventional fluid used in the art without limitation, and may be, for example, a viscous oil usable as a heat transfer medium.

In addition, the roll-type belt press is a method of transferring a predetermined temperature and pressure to a belt surface through a plurality of heating rolls disposed inside the belt. The belt press may include a plurality of upper rollers and a plurality of lower rollers, and may be divided into a plurality of zones with predetermined intervals. For example, the zones may be sequentially divided into a first zone, a second zone, a third zone, and the like from a portion close to an inlet of the belt press. In the present invention, the press process may be performed by sequential operation through a plurality of zones referred to as a heating unit for heating an object, a cooling unit for cooling an object, and/or a metal cooling unit, but is not particularly limited thereto.

In one embodiment, the belt press 80 may comprise an upper belt including a plurality of rollers; a lower belt including a plurality of rollers 82; a heating device for applying heat, pressure, or both to an object passing between the upper belt and the lower belt; and a cooling device capable of cooling the object passing between the upper belt and the lower belt.

The belt press apparatus 80 includes an upper belt and a lower belt, each having a metallic belt or a belt having corresponding properties.

The lower belt has a plurality of rollers installed therein, and some of them operate as driving rollers of the lower belt. In addition, a plurality of rollers are installed in the upper belt, and at least a portion of them serve as driving rollers for driving the upper belt. Further, at least a portion of the upper rollers and at least a portion of the lower rollers have corresponding positions and may be disposed at predetermined intervals. That is, a plurality of pairs of upper rollers and lower rollers are configured and operated.

In addition, the belt press apparatus of the present invention may include a heating device for heating the metal foil 10 and the plurality of insulating films 30. The heating device is not particularly limited, so long as it is a conventional device capable of heating or heating/pressing an object in the art, and for example, a heater, a thermal medium oil circulation heating device, or the like may be used. Such a heating device may be installed on the rear surface of the belt (the upper belt and the lower belt) via a face bearing, or may be built into each roller. However, the present invention is not particularly limited thereto.

In addition, the belt press apparatus of the present invention may include a cooling device for cooling the metal foil 10 and the plurality of insulating films 30. The cooling device is not particularly limited, so long as it is a conventional device capable of cooling a high-temperature laminate in the art. For example, a chiller, a water-cooled cooling jacket, or other heat absorbing devices may be installed to cool a semi-finished product in a heated state. Such a cooling device may be installed on the rear surface of the belt (the upper belt and the lower belt) via a face bearing, similarly to the heating device, or may be built into each roller. That is, the belt press apparatus of the present invention may be configured to integrate a plurality of insulating films by pressing them under predetermined conditions using a heating device and a cooling device, and may further be configured to cool the resulting semi-finished product to obtain a final product.

In one embodiment of step S300, when the metal foil 10 and the plurality of insulating films 30 continuously transferred in a roll-to-roll manner are supplied into the belt press 80, they pass between a first upper roller and a first lower roller. The height of the laminate formed by the metal foil 10 and the plurality of insulating films is primarily adjusted by a gap set between the upper roller and the lower roller, thereby initially controlling the thickness of the flexible metal clad laminate.

Thereafter, the laminate sequentially passes through a second upper roller and a second lower roller, and a third upper roller and a third lower roller, and finally passes through a last pair of upper and lower rollers. The thickness of the thick insulating layer and the flexible metal clad laminate including the same are determined by the gap between the final upper and lower rollers.

During the process of passing through the plurality of upper and lower rollers, the laminate of the metal foil 10 and the insulating film 30 is heated by heat and pressure generated by the heating device.

When the laminate is heated by the heating device, the adjacent metal foil 10 and insulating film 30, or the plurality of insulating films 30, are pressed and laminated together, and then cooled to form a flexible metal clad laminate including a thick insulating layer.

Meanwhile, the adhesive layer 40 used in the flexible metal clad laminate 100 according to the present invention is preferably a thermoplastic polyimide-based adhesive or a thermosetting epoxy resin-based adhesive. In the present invention, by precisely controlling the type of adhesive and its degree of curing, the belt temperature applied in the belt press, and predetermined belt conditions, it is possible to simultaneously improve adhesion, heat resistance, and chemical resistance between the adjacent metal foil 10 and insulating film 30; and to improve interfacial reliability (e.g., adhesion, heat resistance, and chemical resistance) between the plurality of insulating films 30.

Particularly, the epoxy resin-based adhesive is a thermosetting resin in which a curing reaction occurs upon application of a predetermined heat, and a network structure is formed through crosslinking. In this case, when the degree of curing of the epoxy resin-based adhesive layer before and after passing through the belt press is differently controlled, a synergistic effect may be achieved in terms of adhesion and reliability. That is, the process conditions of the belt press are organically controlled so that the epoxy resin-based adhesive layer in an uncured or semi-cured state undergoes curing during passage through the belt press, thereby being converted into a fully cured state.

In one embodiment, the epoxy resin-based adhesive layer may have a curing degree of 50% or less, specifically 30 to 50% in a semi-cured state (B-stage) before passing through the belt press 80, and the epoxy resin-based adhesive layer may have a curing degree of 70% or more, specifically 70 to 95%, and more specifically 90% or more in a fully cured state (C-stage) after passing through the belt press. In this case, the upper limit is not particularly limited.

In another embodiment, the belt temperature applied to the belt press 80, specifically the temperature applied by the heating device 83 provided in the belt press 80, may be controlled to be equal to or lower than the curing temperature of the epoxy resin-based adhesive. For example, the belt temperature in the belt press may be 180 to 380°C.

In another embodiment, when the adhesive layer 40 is an epoxy resin-based adhesive, the belt press process in step S300 may be performed under conditions of a belt temperature of 180 to 380°C, a pressure of 10 to 80 bar, and a transfer speed of 1 to 8 m/min. Specifically, the belt press process may be performed under conditions of a belt temperature of 200 to 360°C, a pressure of 20 to 70 bar, and a transfer speed of 2 to 7 m/min, and more specifically, under conditions of a belt temperature of 200 to 250°C, a pressure of 25 to 50 bar, and a transfer speed of 3 to 6 m/min.

Meanwhile, since the thermoplastic polyimide-based adhesive constituting the adhesive layer 40 is in a fully cured state, a separate curing process is not required.

In another embodiment, when the adhesive layer 40 is a thermoplastic polyimide-based adhesive, the belt press process in step S300 may be performed under conditions of a belt temperature of 300 to 380°C, a pressure of 10 to 80 bar, and a transfer speed of 1 to 8 m/min. Specifically, the belt press process may be performed under conditions of a belt temperature of 310 to 370°C, a pressure of 20 to 70 bar, and a transfer speed of 2 to 7 m/min, and more specifically may be performed under conditions of a belt temperature of 340 to 360°C, a pressure of 25 to 50 bar, and a transfer speed of 3 to 6 m/min.

By performing the continuous process including the above-described steps S100 to S300, a roll-type flexible metal clad laminate 100 including a thick single insulating layer 50 having a thickness of 50 µm or more may be obtained.

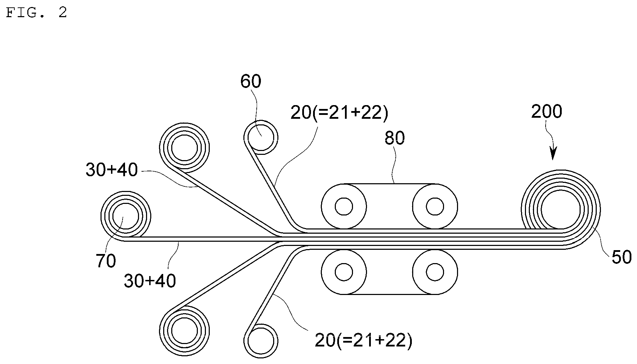

A method of manufacturing a flexible metal laminate 200 including a thick insulating layer according to the present invention will be described with reference to FIG. 2. In FIG. 2, the same reference numerals as those of FIG 1 indicate the same configurations.

Hereinafter, in the description of FIG. 2, the contents overlapping with FIG. 1 will not be described again, and only differences therebetween will be described.

Specifically, referring to FIG. 2, in the method of manufacturing the flexible metal clad laminate 200 according to the second embodiment of the present invention, unlike the first embodiment of FIG. 1 in which a copper foil is used as the metal foil 10, a resin-coated copper foil (RCC) 20 is used as the metal foil.

The resin-coated copper foil (RCC) 20 is a copper foil in which the resin layer 22 is disposed on one or both sides of the copper foil 21.

The copper foil 21 may be any conventional copper foil known in the art without limitation, and for example, may include copper foils manufactured by a rolling method and an electrolytic method. Here, the copper foil may be subjected to anti-oxidation treatment in order to prevent the surface from being oxidatively corroded.

In addition, the copper foil 21 may have a predetermined surface roughness Rz on one surface in contact with the resin layer 22. In this case, the surface roughness Rz may be 0.5 µm to 3.0 µm, and more specifically 0.6 µm to 3.0 µm. However, the present invention is not limited thereto. The thickness of the copper foil 21 is not particularly limited, and may be in a range of about 1 µm to 50 µm, specifically in a range of about 1 µm to 30 µm in consideration of the thickness and mechanical properties of the final flexible metal clad laminate 200.

The resin layer 22 may be disposed in contact with the roughened surface of the copper foil 21, and may be formed to include a conventional insulating resin known in the art.

The resin layer 22 may be a single layer or a plurality of layers including at least two or more resin layers. When the resin layer 22 is formed of a plurality of layers, each layer may be formed of the same or different components, and a resin commonly used in the resin coated copper foil (RCC) field may be used without limitation. For example, the resin layer 22 may include at least one of a polyimide-based resin and an epoxy resin, and may further include at least one selected from the group consisting of a thermoplastic resin, a curing agent, and an inorganic filler. In addition, at least one layer of the plurality of resin layers 22 may include a conventional liquid crystal polymer (LCP) known in the art. More specifically, the resin layer 22 may be formed of the same or different components as the adhesive layer 40 described below. In this case, when the resin layer 22 is formed of the same component as the adhesive layer 40, the adhesive layer 40 may not be included.

In addition, in order to improve adhesion strength, the resin layer-forming surface of the resin-coated copper foil may be subjected to plasma treatment.

Meanwhile, in the second embodiment of the present invention, the adhesive layer 40 may be further included to increase the adhesive strength between the adjacent resin-coated copper foil 20 and the insulating film 30 and the interlayer interface adhesive strength between the plurality of insulating films 30.

The adhesive layer 40 may be formed on the resin layer 22 formed on the resin-coated copper foil 20 in contact with the insulating film 30, or on one surface or both surfaces of the plurality of insulating films 30 in contact with each other.

The thickness of the adhesive layer 40 is not particularly limited, and may be appropriately adjusted within a range known in the art. For example, the thickness of the adhesive layer 40 may be 2 to 15 µm, and preferably 5 to 12 µm.

Otherwise, since the description of the flexible metal clad laminate according to the first embodiment of FIG. 1 can be applied as it is, a separate description thereof will be omitted for the description of the materials, structures, and the like of each component in the second embodiment of FIG. 2.

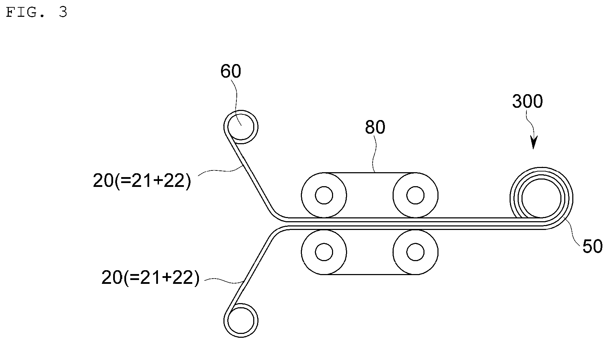

A method of manufacturing a flexible metal laminate 300 including a thick insulating layer according to the present invention will be described with reference to FIG 3. In FIG 3, the same reference numerals as those of FIGs 1-2 indicate the same configurations.

Hereinafter, in the description of FIG. 3, the contents overlapping with FIGs 1-2 will not be described again, and only differences therebetween will be described.

Specifically, referring to FIG. 3 in the method of manufacturing the flexible metal clad laminate 300 according to the third embodiment of the present invention, unlike the first embodiment of FIG 1 in which a copper foil is used as the metal foil 10 and a plurality of insulating films 30 are used, a resin-coated copper foil (RCC) 20 is used as the metal foil and a plurality of the insulating films are not used.

Specifically, a third embodiment of manufacturing the flexible metal clad laminate 300 may include: (a) a step of preparing two roll-type resin-coated metal foils, and arranging the resin layer-forming surfaces of the resin-coated metal foils to face each other (S400); and (b) a step of passing the two resin-coated metal foils through a belt press while continuously supplying the two resin-coated metal foils in a roll-to-roll manner to simultaneously press and laminate the resin-coated metal foils (S500).

In a third embodiment of the present invention, a thick insulating layer 50 is formed by pressing and laminating the resin layers 22 formed on one surface of two resin-coated metal foils 20, instead of including a plurality of insulating films forming a thick insulating layer.

The resin layer 22 provided on the surface of the resin-coated metal foil may be a plurality of layers including at least two or more resin layers. In the plurality of resin layers 22, each layer may be composed of the same or different components, and resins commonly used in the resin-coated copper foil (RCC) field may be used without limitation. For example, each of the resin layers 22 may be the same as or different from each other, and may each independently include at least one of a polyimide-based resin and an epoxy resin, and may further include at least one selected from the group consisting of a thermoplastic resin, a curing agent, and an inorganic filler. Further, at least one layer of the plurality of resin layers 22 may include a conventional liquid crystal polymer (LCP) known in the art. More specifically, the resin layer 22 may be composed of the same or different components as the adhesive layer 40 to be described later. In this case, when the resin layer 22 is formed of the same component as the adhesive layer 40, the adhesive layer 40 may not be included.

In one embodiment, the thickness of the resin layer 22 included in the resin-coated copper foil 20 may be 50 µm or less, specifically 3 to 40 µm, and more specifically 4 to 30 µm. In addition, the total thickness of an insulating layer 50 formed by integrating at least two resin layers facing each other may be 50 µm or more, specifically 50 to 200 µm, and more specifically 50 to 150 µm.

Meanwhile, in the third embodiment of the present invention, an adhesive layer 40 may be further included to increase the adhesive strength between the resin layer 22 forming surfaces of the facing resin-coated copper foils 20. The adhesive layer 40 may be a thermoplastic polyimide-based adhesive or an epoxy resin-based adhesive, but is not limited thereto.

The thickness of the adhesive layer 40 is not particularly limited, and may be appropriately adjusted within a range known in the art. For example, the thickness of the adhesive layer 40 may be 2 to 15 µm, and preferably 3 to 12 µm.

Otherwise, since the description of the flexible metal clad laminate according to the first embodiment of FIG. 1 and the second embodiment of FIG. 2 can be applied as it is, a separate description thereof will be omitted for the description of the materials, structures, and the like of each component in the third embodiment of FIG. 3.

Meanwhile, in the present invention, the double-sided flexible metal laminates 100, 200, and 300 are exemplarily described through the three embodiments described above. However, the present invention is not limited thereto, and it is also within the scope of the present invention to constitute a single-sided flexible metal laminate using one copper foil or one resin-coated copper foil and a plurality of insulating films. In addition, a structure having a multi-layer configuration rather than the illustrated structure, in which the number of the plurality of insulating films and their stacking order are freely selected according to the intended use, or other layers commonly used in the art are introduced, is also within the scope of the present invention.

### <Metal clad laminate>

Another embodiment of the present invention provides a metal clad laminate, and specifically, a flexible metal clad laminate comprising a thick insulating layer formed by the above-described single continuous process.

The flexible metal laminate may have a single-sided or double-sided structure in which a metal layer is disposed on one surface or both surfaces of the thick insulating layer with the thick insulating layer as a base layer. More specifically, the metal clad laminate includes at least one metal layer; and a thick insulating layer formed between one surface of the metal or between metal layers and having a thickness of at least 50 µm.

Here, the constructions of the metal layer and the thick insulating layer are the same as those described above, and thus, separate descriptions thereof will be omitted.

Meanwhile, the flexible metal clad laminate according to the present invention is differentiated from a conventional metal clad laminate in that the flexible metal clad laminate includes a plurality of insulating films and a thick insulating layer formed by an adhesive layer disposed between the insulating films. In particular, the flexible metal clad laminate of the present invention may easily form the thick insulating layer by a single continuous process, and may simultaneously secure the reliability of a final product (e.g., adhesive strength, heat resistance, chemical resistance) by applying a belt press to a roll-to-roll process and simultaneously precisely controlling the composition and degree of curing of the adhesive layer, the belt temperature applied in the belt press, and predetermined belt processing conditions.

In one embodiment, in the flexible metal clad laminate, the interfacial adhesion strength between a plurality of insulating films according to IPC-TM-650 2.4.9 is at least 0.8 kgf/cm, and the adhesion strength between a metal foil and an insulating film may be 0.5 to 1.5 kgf/cm. More specifically, the interfacial adhesion strength between the plurality of insulating films may be 1.3 to 2.0 kgf/cm, and the adhesion strength between the metal foil and the insulating film may be 0.9 to 1.3 kgf/cm.

### <Printed circuit board>

Another embodiment of the present invention provides a printed circuit board, specifically a flexible printed circuit board (FPCB) comprising the above-described thick insulating layer.

The printed circuit board may be a single-layer or multilayer printed circuit board including at least one metal circuit pattern. Specifically, the printed circuit board may comprise a flexible metal clad laminate, and a circuit pattern may be formed on at least one metal foil included in the flexible metal clad laminate, while the thick insulating layer serves as an insulating support member. Here, the flexible metal clad laminate may be the above-described roll-type flexible metal clad laminate itself, or may be an individual piece or a sheet obtained by cutting the roll-type flexible metal clad laminate into predetermined units.

The printed circuit board according to the present invention may be manufactured by methods known in the art. For example, the printed circuit board may be manufactured by continuously supplying a roll-type flexible metal clad laminate using a roll-to-roll apparatus and a belt press, forming through holes in the flexible metal clad laminate and performing through-hole plating, and then etching a metal foil (e.g., a copper foil) including a plated layer to form a circuit.

The above-described flexible metal clad laminate and printed circuit board of the present invention can exhibit high adhesion, excellent heat resistance and chemical resistance. Accordingly, the metal clad laminate and the printed circuit board of the present invention may be usefully used as a metal clad laminate and/or a printed circuit board for a mobile communication device that handles a high-frequency signal of 1 GHz or more, a network-related electronic device such as a base station device, a server, a router, and various electronic devices such as a large computers, and is particularly, preferably applied to a low dielectric flexible metal clad laminate (FCCL) for a 5G mobile device. The present invention may be applied to various technical fields requiring high adhesion strength, excellent heat resistance, and chemical resistance.

Hereinafter, the present invention will be described in detail through examples. However, the following examples are only to illustrate the present invention, and the present invention is not limited by the following examples.

### [Examples 1A: 1 to 9]

Two roll-type copper foils (thickness: 12 µm, roughness (Rz): 2.5 µm or less), which were continuously supplied from copper foil supply rollers, were prepared.

In addition, three polyimide films (thickness: 50 µm), which were continuously supplied from an insulating film supply roller, were prepared. A thermoplastic polyimide adhesive layer (thickness: 6 µm) was formed on both surfaces of the polyimide films.

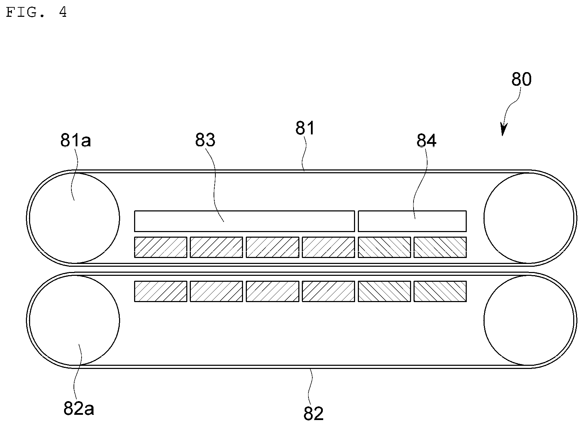

The roll-type copper foils and the roll-type insulating films were continuously transferred through a transfer roller, and then passed through a hydraulic belt press (Belt press) as shown in FIG. 4 to simultaneously press and laminate them, thereby manufacturing a roll-type flexible metal clad laminate comprising a thick insulating layer. The thick insulating layer included in the manufactured flexible metal clad laminate had a thickness of 150 µm. The specific conditions of the belt press in this example were controlled as shown in Table 1 below.

### [Comparative Example 1A: 1]

A flexible metal clad laminate according to Comparative Example 1A-1 was manufactured in the same manner as in Example 1A:1, except that a thermoplastic polyimide adhesive layer was not included as shown in Table 1.

### [Comparative Example 1A: 2]

A flexible metal clad laminate according to Comparative Example 1A:2 was manufactured in the same manner as in Example 1A-3, except that a thermoplastic polyimide adhesive layer was not included as shown in Table 1.

### [Comparative Example 1A: 3]

A flexible metal clad laminate according to Comparative Example 1A-3 was manufactured in the same manner as in Example 1A-1, except that a hydraulic belt press was not used and a general roll-to-roll process was used.

### [Comparative Example 1A: 4]

A flexible metal clad laminate according to Comparative Example 1A-4 was manufactured in the same manner as in Example 1A-3, except that a hydraulic belt press was not used and a roll-to-roll process was used.

### [Experimental Example 1A]

The properties of the flexible copper clad laminates manufactured in Examples 1A-1 to 1A-9 and Comparative Examples (Comp. Ex.) 1A-1 to 1A-4 were measured according to the measurement methods described below, and the results are shown in Table 1 below.

### 1) Evaluation of adhesion strength between insulating films

The adhesion strength was measured using an adhesion tester in accordance with IPC TM-650 2.4.9.

### 2) Evaluation of adhesion strength between insulating film and copper foil

The adhesion strength was measured using an adhesion tester in accordance with IPC TM-650 2.4.9.

### 3) Heat resistance evaluation

The flexible copper clad laminate was cut into a size of 50 mm × 50 mm and floated in a solder bath at 288°C for 10 seconds in accordance with IPC TM-650 2.4.13, and then visually inspected. Delamination or blistering was evaluated as NG.

### 4) Appearance evaluation

The appearance of the flexible copper clad laminate was visually inspected. Wrinkling or lifting was evaluated as NG.

**[Table 1]**

| | | Examples 1A | | | | | | | | | Comp. Exs.1A | | | |
|---|---|---|---|---|---|---|---|---|---|---|---|---|---|---|
| | | 1 | 2 | 3 | 4 | 5 | 6 | 7 | 8 | 9 | 1 | 2 | 3 | 4 |
| Process conditi ons | Belt Temp. (°C) | 340 | 340 | 360 | 360 | 340 | 360 | 300 | 320 | 380 | 340 | 360 | 340 | 360 |
| | Pressure (bar) | 50 | 25 | 50 | 25 | 50 | 50 | 50 | 50 | 50 | 50 | 50 | 50 | 50 |
| | Transfer speed (m/min) | 5 | 5 | 5 | 5 | 5 | 5 | 5 | 5 | 5 | 5 | 5 | 5 | 5 |
| Adhesive layer | | TPI | TPI | TPI | TPI | TPI | TPI | TPI | TPI | TPI | - | - | TPI | TPI |
| Plasma treatment of insulating film surface | | ○ | ○ | ○ | ○ | X | X | ○ | ○ | ○ | ○ | ○ | ○ | ○ |
| Physical properties | adhesion strength between insulating films (kgf/cm) | >1.5 | >1.5 | >1.5 | >1.5 | 0.5 | 0.5 | 0.7 | 0.8 | >1.5 | Adhesion failure | Adhesion failure | 0.7 | 0.8 |
| | adhesion strength between insulating film and copper foil (kgf/cm) | 0.9 | 0.5 | 1.2 | 0.9 | 0.7 | 1.2 | 0.2 | 0.5 | 1.2 | Adhesion failure | Adhesion failure | 0.8 | 1.1 |
| | Heat resistance (288°C, 10 sec) | Pass | Pass | Pass | Pass | NG | NG | NG | NG | Pass | NG | NG | NG | NG |
| | Appearance | Good | Good | Good | Good | Good | Good | Good | Good | NG (Wrinkle) | NG (adhesion failure) | NG (adhesion failure) | Good | Good |

As shown in Table 1, it was confirmed that a flexible metal clad laminate including a thick insulating layer can be easily and simultaneously manufactured through a single continuous process by applying a belt press to a roll-to-roll process, introducing a thermoplastic polyimide-based adhesive layer between the copper foil and the insulating film, and optimizing the belt press process conditions. Furthermore, the manufactured flexible metal clad laminate exhibited excellent physical properties. In particular, as in Examples 1A-1 to 1A-4, when the belt press process conditions were precisely controlled within a predetermined range, a flexible metal clad laminate having excellent adhesion strength, thermal resistance, and appearance properties could be manufactured.

### [Examples 1B: 10~17]

Two roll-type copper foils (thickness: 12 µm, roughness (Rz): 2.5 µm or less), which were continuously supplied from copper foil supply rollers, were prepared.

In addition, three polyimide films (thickness: 50 µm), which were continuously supplied from an insulating film supply roller, were prepared. An epoxy resin-based adhesive layer (thickness: 6 µm) was formed on both surfaces of the polyimide films. Here, the adhesive layer was in a semi-cured state.

The roll-type copper foils and the roll-type insulating films were continuously transferred through a transfer roller, and then passed through a hydraulic belt press (Belt press) as shown in FIG. 4 to simultaneously press and laminate them, thereby manufacturing a roll-type flexible metal clad laminate comprising a thick insulating layer. The thick insulating layer included in the manufactured flexible metal clad laminate had a thickness of 150 µm. The specific conditions of the belt press in this example were controlled as shown in Table 2 below.

### [Comparative Examples 1B: 5 to 6]

Flexible metal clad laminates according to Comparative Examples 1B-5 to 1B-6 were manufactured in the same manner as in Examples 1B-10 to 1B-11, except that an epoxy resin-based adhesive layer was not included as shown in Table 2.

### [Experimental Example 1B]

The properties of the flexible copper clad laminates manufactured in Examples 1B-10 to 1B-17 and Comparative Examples (Comp. Ex.) 1B-5 to 1B-6 were measured according to the measurement methods described below, and the results are shown in Table 2 below.

Here, the evaluation of the adhesion strength between the insulating films, the evaluation of the adhesion strength between the insulating film and the copper foil, and the appearance evaluation were performed in the same manner as in Experimental Example 1A.

**[Table 2]**

| | | Examples 1B | | | | | | | | Comp. Exs. 1B | |
|---|---|---|---|---|---|---|---|---|---|---|---|
| | | 10 | 11 | 12 | 13 | 14 | 15 | 16 | 17 | 5 | 6 |
| Process conditions | Belt Temp. (°C) | 200 | 220 | 200 | 220 | 200 | 220 | 180 | 240 | 200 | 220 |
| | Pressure (bar) | 50 | 50 | 25 | 25 | 50 | 50 | 50 | 50 | 50 | 50 |
| | Transfer speed (m/min) | 5 | 5 | 5 | 5 | 5 | 5 | 5 | 5 | 5 | 5 |
| Adhesive layer | | Epoxy | Epoxy | Epoxy | Epoxy | Epoxy | Epoxy | Epoxy | Epoxy | - | - |
| Adhesive Layer Curing Degree (Post-Heating Belt) (%) | | 70 | 90 | 70 | 90 | 70 | 90 | 40 | 95 | - | - |
| Plasma treatment of insulating film surface | | ○ | ○ | ○ | ○ | X | X | ○ | ○ | ○ | ○ |
| | adhesion strength between insulating films (kgf/cm) | 1.3 | >1.5 | 1.1 | 1.3 | 0.8 | 0.8 | 1 | >1.5 | Adhesion failure | Adhesion failure |
| Physical properties | adhesion strength between insulating film and copper foil (kgf/cm) | 1 | 1.3 | 0.5 | 0.9 | 0.7 | 1.2 | 0.5 | 1.3 | Adhesion failure | Adhesion failure |
| | Heat resistance (288°C, 10 sec) | Pass | Pass | Pass | Pass | NG | NG | Pass | Pass | NG | NG |
| | Appearance | Good | Good | Good | Good | Good | Good | Good | NG (Wrinkle) | NG (adhesion failure) | NG (adhesion failure) |

As shown in Table 2, it was confirmed that a flexible metal clad laminate including a thick insulating layer can be easily and simultaneously manufactured through a single continuous process by applying a belt press to a roll-to-roll process, introducing an epoxy resin-based adhesive layer between the copper foil and the insulating film, and optimizing the belt press process conditions. Furthermore, the manufactured flexible metal clad laminate exhibited excellent physical properties.

Meanwhile, Example 1B-16 may be used as a control when comparing the physical properties of the flexible metal clad laminates according to the degree of curing of the epoxy resin-based adhesive layer after passing through the heating belt.

### [Examples 2A: 1~9]

Roll type Flexible metal clad laminates according to Examples 2A-1 to 2A-9, each including a thick insulating layer, were manufactured in the same manner as in Examples 1A-1 to 1A-9, except that two roll-type resin-coated copper foils (thickness: 12 µm, roughness (Rz): 2.5 µm or less) were used instead of the two roll-type copper foils. The thick insulating layer included in the manufactured flexible metal clad laminate had a thickness of 150 µm. The specific conditions of the belt press in this example were controlled as shown in Table 3 below.

### [Comparative Examples 2A: 1~2]

Flexible metal clad laminates according to Comparative Examples 2A-1 to 2A-2 were manufactured in the same manner as in Examples 2A-1 and 2A-3, except that a thermoplastic polyimide-based adhesive layer was not included as shown in Table 3.

### [Experimental Example 2A]

The properties of the flexible copper clad laminates manufactured in Examples 2A-1 to 2A-9 and Comparative Examples (Comp. Ex.) 2A-1 to 2A-2 were measured according to the measurement methods described below, and the results are shown in Table 3 below.

Here, the evaluation of the adhesion strength between the insulating films, the evaluation of the adhesion strength between the insulating film and the copper foil, and the appearance evaluation were performed in the same manner as in Experimental Example 1A.

**[Table 3]**

| | | Examples 2A | | | | | | | | | Comp. Exs. 2A | |
|---|---|---|---|---|---|---|---|---|---|---|---|---|
| | | 1 | 2 | 3 | 4 | 5 | 6 | 7 | 8 | 9 | 1 | 2 |
| Process conditions | Belt Temp. (°C) | 340 | 340 | 360 | 360 | 340 | 360 | 300 | 320 | 380 | 340 | 360 |
| | Pressure (bar) | 50 | 25 | 50 | 25 | 50 | 50 | 50 | 50 | 50 | 50 | 50 |
| | Transfer speed (m/min) | 5 | 5 | 5 | 5 | 5 | 5 | 5 | 5 | 5 | 5 | 5 |
| Adhesive layer of RCC | | TPI | TPI | TPI | TPI | TPI | TPI | TPI | TPI | TPI | - | - |
| Adhesive layer of insulating film | | TPI | TPI | TPI | TPI | TPI | TPI | TPI | TPI | TPI | - | - |
| Plasma treatment of insulating film surface | | ○ | ○ | ○ | ○ | X | X | ○ | ○ | ○ | ○ | ○ |
| Physical properties | adhesion strength between insulating films (kgf/cm) | >1.5 | >1.5 | >1.5 | >1.5 | 0.5 | 0.5 | 0.7 | 0.8 | >1.5 | Adhesion failure | Adhesion failure |
| | adhesion strength between insulating film and copper foil (kgf/cm) | >1.5 | >1.5 | >1.5 | >1.5 | 0.5 | 0.5 | 0.7 | 0.8 | >1.5 | Adhesion failure | Adhesion failure |
| | Heat resistance (288°C, 10 sec) | Pass | Pass | Pass | Pass | NG | NG | NG | NG | Pass | NG | NG |
| | Appearance | Good | Good | Good | Good | Good | Good | Good | Good | NG (Wrinkle) | NG (adhesion failure) | NG (adhesion failure) |

As shown in Table 3, it was confirmed that a flexible metal clad laminate having excellent adhesion strength, thermal resistance, and appearance properties could be manufactured by applying a belt press to a roll-to-roll process, and precisely controlling the belt press process conditions within a predetermined range as in Example 1A, except for changing the copper foil to the resin-coated copper foil.

### [Examples 2B: 10∼17]

Roll type Flexible metal clad laminates according to Examples 2B-10 to 2B-16, each including a thick insulating layer, were manufactured in the same manner as in Examples 1B-10 to 1B-17, except that two roll-type resin-coated copper foils (thickness: 12 um, roughness (Rz): 2.5 µm or less) were used instead of the two roll-type copper foils. The thick insulating layer included in the manufactured flexible metal clad laminate had a thickness of 150 µm. The specific conditions of the belt press in this example were controlled as shown in Table 4 below.

### [Comparative Examples 2B: 3~4]

Flexible metal clad laminates according to Comparative Examples 2B-3 to 2B-4 were manufactured in the same manner as in Examples 2B-10 and 2B-12, except that an epoxy resin-based adhesive layer was not included as shown in Table 4.

### [Experimental Example 2B]

The properties of the flexible copper clad laminates manufactured in Examples 2B-10 to 2B-17 and Comparative Examples 2B-3 to 2B-4 were measured according to the measurement methods described below, and the results are shown in Table 4 below.

Here, the evaluation of the adhesion strength between the insulating films, the evaluation of the adhesion strength between the insulating film and the copper foil, and the appearance evaluation were performed in the same manner as in Experimental Example 1A.

**[Table 4]**

| | | Examples 2B | | | | | | | | Comp. Exs.2B | |
|---|---|---|---|---|---|---|---|---|---|---|---|
| | | 10 | 11 | 12 | 13 | 14 | 15 | 16 | 17 | 3 | 4 |
| Process conditions | Belt Temp. (°C) | 200 | 220 | 200 | 220 | 200 | 220 | 240 | 180 | 200 | 220 |
| | Pressure (bar) | 50 | 50 | 25 | 25 | 50 | 50 | 50 | 50 | 50 | 50 |
| | Transfer speed (m/min) | 5 | 5 | 5 | 5 | 5 | 5 | 5 | 5 | 5 | 5 |
| Adhesive layer of RCC | | Epoxy | Epoxy | Epoxy | Epoxy | Epoxy | Epoxy | Epoxy | Epoxy | - | - |
| Adhesive layer of insulating film | | Epoxy | Epoxy | Epoxy | Epoxy | Epoxy | Epoxy | Epoxy | Epoxy | - | - |
| Adhesive layer Curing Degree (Post-Heating Belt) (%) | | 70 | 90 | 70 | 90 | 70 | 90 | 95 | 40 | - | - |
| Plasma treatment of insulating film surface | | ○ | ○ | ○ | ○ | X | X | ○ | ○ | ○ | ○ |
| Physical properties | adhesion strength between insulating films (kgf/cm) | 1.3 | >1.5 | 1.1 | 1.3 | 0.8 | 0.8 | >1.5 | 1.0 | Adhesion failure | Adhesion failure |
| | adhesion strength between insulating film and copper foil (kgf/cm) | 1.3 | >1.5 | 1.1 | 1.3 | 0.8 | 0.8 | >1.5 | 1.0 | Adhesion failure | Adhesion failure |
| | Heat resistance (288°C, 10 sec) | Pass | Pass | Pass | Pass | NG | NG | Pass | Pass | NG | NG |
| | Appearance | Good | Good | Good | Good | Good | Good | NG (Wrinkle) | Good | NG (adhesion failure) | NG (adhesion failure) |

As shown in Table 4, it was confirmed that a flexible metal clad laminate having excellent adhesion strength, thermal resistance, and appearance properties could be manufactured by applying a belt press to a roll-to-roll process, and precisely controlling the belt press process conditions within a predetermined range as in Example 1B, except for changing the copper foil to the resin-coated copper foil.

Meanwhile, Example 2B-17 may be used as a control when comparing the physical properties of the flexible metal clad laminates according to the degree of curing of the epoxy resin-based adhesive layer after passing through the heating belt.

### [Examples 3A: 1~9]

Roll type Flexible metal clad laminates according to Examples 3A-1 to 3A-9, each including a thick insulating layer, were manufactured in the same manner as in Examples 1A-1 to 1A-9, except that two roll-type resin-coated copper foils (thickness: 12 µm, roughness (Rz): 2.5 µm or less) were used instead of the two roll-type copper foils, and three polyimide films were not used. Here, a plurality of resin layers including a polyimide layer (thickness: 20 µm) and a thermoplastic polyimide layer (thickness: 5 µm) were formed on one surface of the resin-coated copper foil (RCC). The insulating layer included in each of the flexible metal clad laminates manufactured in Examples 3A-1 to 3A-9 described above had a thickness of 50 µm. The specific conditions of the belt press in this Example were controlled as shown in Table 5 below.

### [Comparative Examples 3A: 1~2]

Flexible metal clad laminates according to Comparative Examples (Comp. Ex.) 3A-1 to 3A-2 were manufactured in the same manner as in Examples 3A-1 and 3A-3, except that a thermoplastic polyimide-based adhesive layer was not included as shown in Table 5.

### [Experimental Example 3A]

The properties of the flexible copper clad laminates manufactured in Examples 3A-1 to 3A-9 and Comparative Examples (Comp. Ex.) 3A-1 to 3A-2 were measured according to the measurement methods described below, and the results are shown in Table 5 below.

Here, the evaluation of the adhesion strength between the resin layer and the copper foil, and the appearance evaluation were performed in the same manner as in Experimental Example 1A.

**[Table 5]**

| | | Examples 3A | | | | | | | | | Comp. Exs. 3A | |
|---|---|---|---|---|---|---|---|---|---|---|---|---|
| | | 1 | 2 | 3 | 4 | 5 | 6 | 7 | 8 | 9 | 1 | 2 |
| Process conditions | Belt Temp. (°C) | 340 | 340 | 360 | 360 | 340 | 360 | 300 | 320 | 380 | 340 | 360 |
| | Pressure (bar) | 50 | 25 | 50 | 25 | 50 | 50 | 50 | 50 | 50 | 50 | 50 |
| | Transfer speed (m/min) | 5 | 5 | 5 | 5 | 5 | 5 | 5 | 5 | 5 | 5 | 5 |
| Adhesive layer of RCC | | TPI | TPI | TPI | TPI | TPI | TPI | TPI | TPI | TPI | - | - |
| Plasma treatment of resin layer surface | | ○ | ○ | ○ | ○ | X | X | ○ | ○ | ○ | ○ | ○ |
| Physical properties | adhesion strength between resin layer and copper foil (kgf/cm) | >1.5 | >1.5 | >1.5 | >1.5 | 0.5 | 0.5 | 0.7 | 0.8 | >1.5 | Adhesion failure | Adhesion failure |
| | Heat resistance (288°C, 10 sec) | Pass | Pass | Pass | Pass | NG | NG | NG | NG | Pass | NG | NG |
| | Appearance | Good | Good | Good | Good | Good | Good | Good | Good | NG (Wrinkle) | NG (adhesion failure) | NG (adhesion failure) |

As shown in Table 5, it was confirmed that a flexible metal clad laminate having excellent adhesion strength, thermal resistance, and appearance properties could be manufactured by applying a belt press to a roll-to-roll process, and precisely controlling the belt press process conditions within a predetermined range as in Example 1A, except that the insulating film was not used and the copper foil was changed to the resin-coated copper foil.

### [Examples 3B: 10∼16]

Roll type Flexible metal clad laminates according to Examples 3B-10 to 3B-16, each including a thick insulating layer, were manufactured in the same manner as in Examples 1B-10 to 1B-17, except that two roll-type resin-coated copper foils (thickness: 12 µm, roughness (Rz): 2.5 µm or less) were used instead of the two roll-type copper foils, and three polyimide films were not used. Here, a plurality of resin layers including a polyimide layer (thickness: 20 µm) and an epoxy resin-based adhesive layer (thickness: 5 µm) were formed on one surface of the resin-coated copper foil (RCC). The thick insulating layer included in each of the flexible metal clad laminates manufactured in Examples 3B-10 to 3B-16 described above had a thickness of 50 µm. The specific conditions of the belt press in this Example were controlled as shown in Table 6 below.

### [Comparative Examples 3B: 3~4]

Flexible metal clad laminates according to Comparative Examples 3B-3 to 3B-4 were manufactured in the same manner as in Examples 3B-10 and 3B-11, except that an epoxy resin-based adhesive layer was not included as shown in Table 6.

### [Experimental Example 3B]

The properties of the flexible copper clad laminates manufactured in Examples 3B-10 to 3B-17 and Comparative Examples (Comp. Ex.) 3B-3 to 3B-4 were measured according to the measurement methods described below, and the results are shown in Table 6 below.

Here, the evaluation of the adhesion strength between the resin layer and the copper foil, and the appearance evaluation were performed in the same manner as in Experimental Example 1A.

**[Table 6]**

| | | Examples 3B | | | | | | | | Comp. Exs. 3B | |
|---|---|---|---|---|---|---|---|---|---|---|---|
| | | 10 | 11 | 12 | 13 | 14 | 15 | 16 | 17 | 3 | 4 |
| Process conditions | Belt Temp. (°C) | 200 | 220 | 200 | 220 | 200 | 220 | 240 | 180 | 200 | 220 |
| | Pressure (bar) | 50 | 50 | 25 | 25 | 50 | 50 | 50 | 50 | 50 | 50 |
| | Transfer speed (m/min) | 5 | 5 | 5 | 5 | 5 | 5 | 5 | 5 | 5 | 5 |
| Adhesive layer of RCC | | Epoxy | Epoxy | Epoxy | Epoxy | Epoxy | Epoxy | Epoxy | Epoxy | - | - |
| Adhesive layer Curing Degree (Post-Heating Belt) (%) | | 70 | 90 | 70 | 90 | 70 | 90 | 95 | 40 | - | - |
| Plasma treatment of resin layer surface | | ○ | ○ | ○ | ○ | X | X | ○ | ○ | ○ | ○ |
| Physical properties | adhesion strength between resin layer and copper foil (kgf/cm) | 1.3 | >1.5 | 1.1 | 1.3 | 0.8 | 0.8 | >1.5 | 1.0 | Adhesion failure | Adhesion failure |
| | Heat resistance (288°C, 10 sec) | Pass | Pass | Pass | Pass | NG | NG | Pass | Pass | NG | NG |
| | Appearance | Good | Good | Good | Good | Good | Good | NG (Wrinkle) | Good | NG (adhesion failure) | NG (adhesion failure) |

As shown in Table 6, it was confirmed that a flexible metal clad laminate having excellent adhesion strength, thermal resistance, and appearance properties could be manufactured by applying a belt press to a roll-to-roll process, and precisely controlling the belt press process conditions within a predetermined range as in Example 1B, except that the insulating film was not used and the copper foil was changed to the resin-coated copper foil.

Meanwhile, Example 3B-17 may be used as a control when comparing the physical properties of the flexible metal clad laminates according to the degree of curing of the epoxy resin-based adhesive layer, which was used as one of a plurality of resin layers in the resin-coated copper foil, after passing through the heating belt.

## Claims

1. A method for manufacturing a flexible metal clad laminate including a thick insulating layer having a thickness of 50 *µ*m or more, the method comprising the steps of:
(i) preparing at least one roll-type metal foil;
(ii) preparing a plurality of roll-type insulating films; and
(iii) passing the metal foil and the insulating films through a belt press while continuously supplying the metal foil and the insulating films in a roll-to-roll manner to simultaneously press and laminate the metal foil and the insulating films,
wherein at least one of the metal foil and the insulating films comprises an adhesive layer formed on one or both surfaces thereof.

2. The method of claim 1, wherein the metal foil is a copper foil or a resin-coated copper foil (RCC).

3. The method of claim 1, wherein the step (i) comprises preparing at least two or more metal foils, and the at least two metal foils have the same thickness and surface roughness as each other.

4. The method of claim 1, wherein the metal foil has a roughness (Rz) of 0.5 to 3 µm and a thickness of 1 to 50 µm.

5. The method of claim 3, wherein, when at least two metal foils are prepared, the plurality of insulating films prepared in the step (ii) are disposed between the metal foils.

6. The method of claim 2, wherein a surface of the resin-coated copper foil on which the resin layer is formed or a surface of the insulating film is plasma-treated.

7. The method of claim 1, wherein the adhesive layer is formed on one surface of the metal foil in contact with the insulating film,
one surface of the insulating film in contact with the metal foil, or
one surface or both surfaces of the plurality of insulating films in contact with each other.

8. The method of claim 1, wherein the adhesive layer comprises at least one selected from the group consisting of a thermoplastic polyimide-based adhesive and an epoxy resin-based adhesive.

9. The method of claim 1, wherein the thickness of a single insulating film among the plurality of insulating films in the step (ii) is 50 µm or less, and
the thickness of the thick insulating layer formed from the plurality of insulating films is 50 to 200 µm.

10. The method of claim 1, wherein the belt press of step (iii) includes:
an upper belt having a plurality of rollers;
a lower belt having a plurality of rollers;
a heating device for applying heat, pressure, or both to an object passing between the upper belt and the lower belt; and
a cooling device capable of cooling the object passing between the upper belt and the lower belt.

11. The method of claim 1, wherein the belt press of step (iii) is a hydraulic belt press or a roll-type belt press.

12. The method of claim 8, wherein a curing temperature of the epoxy resin-based adhesive is equal to or lower than a belt temperature applied to the belt press.

13. The method of claim 12, wherein the epoxy resin-based adhesive layer has a degree of curing of 50% or less in a semicured state before passing through the belt press, and has a degree of curing of 70% or more in a fully cured state after passing through the belt press.

14. The method of claim 8, wherein, when the adhesive layer is an epoxy resin-based adhesive, the step (iii) is performed under conditions of a belt temperature of 180 to 380°C, a pressure of 10 to 80 bar, and a transfer speed of 1 to 8 m/min.

15. The method of claim 8, wherein, when the adhesive layer is a thermoplastic polyimide-based adhesive, the step (iii) is performed under conditions of a belt temperature of 300 to 380°C, a pressure of 10 to 80 bar, and a transfer speed of 1 to 8 m/min.

16. The method of claim 1, wherein a roll-type flexible metal clad laminate including a thick single insulating layer is formed by a continuous process comprising steps (i) to (iii).

17. The method of claim 16, wherein the flexible metal clad laminate satisfies the following conditions
an interfacial adhesion strength between the plurality of insulating films is 0.8 kgf/cm or more; and
an adhesion strength between the metal foil and the insulating film is 0.5 to 1.5 kgf/cm.

18. A method for continuously manufacturing a flexible metal clad laminate including a thick insulating layer having a thickness of 50 *µ*m or more, the method comprising the steps of:
(a) preparing two roll-type resin-coated metal foils, and arranging the resin layer-forming surfaces of the resin-coated metal foils to face each other; and
(b) passing the two resin-coated metal foils through a belt press while continuously supplying the two resin-coated metal foils in a roll-to-roll manner to simultaneously press and laminate the resin-coated metal foils.

19. The method of claim 18, wherein the resin layer formed on the surface of the resin-coated metal foil includes at least two or more resin layers.

20. The method of claim 18, wherein the thickness of the resin layer included in the resin-coated copper foil is 50 *µ*m or less, and
the total thickness of an insulating layer formed by integrating at least two resin layers facing each other is 50 to 200 *µ*m.
